(19) Europäisches Patentamt
European Patent Office
Office européen des brevets

(11) EP 1 468 819 A1

(12) **EUROPEAN PATENT APPLICATION**

(43) Date of publication:
20.10.2004 Bulletin 2004/43

(51) Int Cl.$^7$: **B32B 27/20**, C08K 3/34, C08K 7/00

(21) Application number: 04008129.1

(22) Date of filing: 02.04.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **04.04.2003 JP 2003101549**

(71) Applicant: **Nippon Synthetic Chemical Industry Co., Ltd**
**Osaka-shi, Osaka-fu (JP)**

(72) Inventors:
• **Noma, Shinji,**
**Nippon Synthetic Chem., Ind. Co. Ltd**
**Kita-ku, Osaka-shi, Osaka-fu (JP)**
• **Kani, Shouichi,**
**Nippon Synthetic Chem., Ind Co Ltd**
**Kita-ku Osaka-shi Osaka-fu (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

(54) **Ethylene-vinyl alcohol copolymer resin composition, process for its production and multilayered structure**

(57)    A resin composition prepared by melt-mixing (A) a hydrolyzed ethylene-vinyl acetate copolymer having a water content of 20 to 50 % by weight and (B) a water-swellable inorganic compound having a layer structure in an extruder under the condition of $200 < R \times W < 8,000$ wherein R is a residence time (second) of (A) and (B) in the extruder from the introduction of both (A) and (B) into the extruder up to the extrusion thereof from the extruder, and W is a consumed electric power (kW) of the extruder. The composition provides molded articles such as film having excellent boiling water resistance, impact resistance and flex cracking resistance as well as gas barrier property, which are useful as a packaging material.

**EP 1 468 819 A1**

## Description

The present invention relates to a resin composition comprising a hydrolyzed ethylene-vinyl acetate copolymer (hereinafter referred to as "EVOH") and a water-swellable, layered, inorganic compound, and more particularly to an EVOH resin composition suitable for the production of molded articles having excellent properties such as boiling water resistance, impact resistance and flex cracking resistance.

In general, EVOH is superior in transparency, antistatic property, oil resistance, solvent resistance, gas barrier property, perfume retainability and the like and is a melt-moldable thermoplastic resin, so it has been used as a packaging material for various purposes such as food packaging.

For the purpose of further improving the gas barrier property, it has been attempted to incorporate an inorganic material into EVOH. For example, in JP-A-2001-1476 it is proposed to form a barrier layer of a bottle from a mixture of EVOH and a silicate composite (so-called organic modified clay) obtained by ion exchange reaction with a positive charge organic compound. In JP-A-5-39392 it is proposed to mix EVOH with a water-swellable phyllosilicate in the presence of water.

Food packaging materials are required to have, besides an excellent gas barrier property, a boiling water resistance (whitening resistance to boiling), since they are frequently subjected to boiling sterilization at a temperature of about 90°C. Food packaging materials are also required to have mechanical properties sufficient as a packaging material, e.g., impact resistance and flex cracking resistance. However, conventional gas barrier films prepared from resin compositions comprising EVOH and an inorganic material are not satisfactory for these demands. For example, the gas barrier layer proposed in JP-A-2001-1476 has an improved gas barrier property, but mechanical properties thereof such as impact resistance and flex cracking resistance are not taken into consideration at all since the gas barrier layer is laminated with other layers to form a film. The proposed gas barrier layer also has a problem of poor boiling water resistance (whitening resistance to hot water of about 90°C). The EVOH resin composition containing a water-swellable phyllosilicate, proposed in JP-A-5-39392, has a good gas barrier property and a good transparency, but there is still room for improvement in boiling water resistance and mechanical properties such as impact resistance and flex cracking resistance.

Thus, it has been demanded to provide an EVOH resin composition having excellent boiling water resistance and mechanical properties such as impact resistance and flex cracking resistance as well as gas barrier property.

It is an object of the present invention to provide an EVOH resin composition having excellent properties such as gas barrier property, boiling water resistance and mechanical properties, e.g., impact resistance and flex cracking resistance.

A further object of the present invention is to provide an EVOH resin composition useful for the preparation of packaging materials such as film, sheet or container.

Another object of the present invention is to provide a laminate having a layer prepared from an EVOH resin composition having excellent properties such as gas barrier property, boiling water resistance and mechanical properties.

Still another object of the present invention is to provide a packaging material for foods, chemicals, medicines, agricultural chemicals and the like.

These and other objects of the present invention will become apparent from the description hereinafter.

It has been found that the above-mentioned objects are achieved by a resin composition prepared by melt-mixing (A) EVOH having a water content of 20 to 50 % by weight and (B) a water-swellable inorganic compound having a layer structure in an extruder under a specific condition.

Thus, in accordance with the present invention, there is provided a resin composition comprising (A) a hydrolyzed ethylene-vinyl acetate copolymer and (B) a water-swellable inorganic compound having a layer structure, wherein the resin composition is prepared by melt-mixing the copolymer (A) having a water content of 20 to 50 % by weight and the inorganic compound (B) in an extruder under the following condition (1):

$$200 < R \times W < 8,000 \qquad (1)$$

wherein R is a residence time (second) of (A) and (B) in the extruder from the introduction of both (A) and (B) into the extruder up to the extrusion thereof from the extruder, and W is a consumed electric power (kW) of the extruder.

Preferably, the resin composition of the present invention has a water content of 0.1 to 3 % by weight.

The water content of the hydrolyzed ethylene-vinyl acetate copolymer (EVOH) denotes a value determined by the following method. [Method for measuring the water content]

EVOH is weighed by an electronic balance (W1), dried for 5 hours in a hot air drier kept at 150°C, allowed to cool for 30 minutes in a desiccator and weighted again in the same manner (W2). The water content is calculated according to the following equation (2):

$$\text{Water content (\% by weight)} = [(W1 - W2)/W1] \times 100 \qquad (2)$$

wherein W1 is the weight (g) of EVOH before drying, and W2 is the weight (g) of EVOH after drying and cooling.

The resin composition of the present invention provides films having excellent boiling water resistance, impact resistance and flex cracking resistance as well as an excellent gas barrier property. Therefore, films, sheets and containers prepared from the resin composition are useful as a packaging material for various materials such as general goods, retort-packed foods, medicines, industrial chemicals, agricultural chemicals and the like.

EVOH (A) used in the present invention is not particularly limited, but it is preferable that the ethylene content of EVOH is from 5 to 60 % by mole, especially 10 to 60 % by mole, more especially 20 to 55 % by mole, further especially 25 to 50 % by mole. If the ethylene content is less than 5 % by mole, the long run processability in melt molding is lowered, and if the ethylene content exceeds 60 % by mole, the gas barrier property is lowered. It is also preferable that the degree of hydrolysis in the vinyl acetate component of EVOH is not less than 90 % by mole, especially not less than 95 % by mole, more especially not less than 99 % by mole, further especially not less than 99.5 % by mole. If the degree of hydrolysis is less than 90 % by mole, the gas barrier property and the long run processability in melt molding are lowered.

The EVOH (A) may contain units of a copolymerizable ethylenically unsaturated monomer within a range not impairing the effects of the present invention, preferably in an amount of not more than about 10 % by mole. Examples of the ethylenically unsaturated monomer are, for instance, an olefin such as propylene, 1-butene or isobutene; an unsaturated carboxylic acid or anhydride thereof such as acrylic acid, methacrylic acid, crotonic acid, phthalic acid, phthalic anhydride, maleic acid, maleic anhydride, itaconic acid or itaconic anhydride, a salt and a $C_1$ to $C_{18}$ mono- or di-alkyl ester of the unsaturated carboxylic acid; an acrylamide compound such as acrylamide, a $C_1$ to $C_{18}$ N-alkyl acrylamide, N,N-dimethylacrylamide, 2-acrylamidepropanesulfonic acid or its salt, or acrylamidepropyldimethylamine, its acid salt or its quaternary salt; a methacrylamide compound such as methacrylamide, a $C_1$ to $C_{18}$ N-alkyl methacrylamide, N,N-dimethylmethacrylamide, 2-methacrylamidepropanesulfonic acid or its salt, or methacrylamidepropyldimethylamine, its acid salt or its quaternary salt; an N-vinylamide such as N-vinylpyrolidone, N-vinylformamide or N-vinylacetoamide; a vinyl cyanide such as acrylonitrile or methacrylonitrile; a vinyl ether such as a $C_1$ to $C_{18}$ alkyl vinyl ether, a $C_1$ to $C_{18}$ hydroxyalkyl vinyl ether or an alkoxyalkyl vinyl ether; a halogenated vinyl compound such as vinyl chloride, vinylidene chloride, vinyl fluoride, vinylidene fluoride or vinyl bromide; a vinylsilane such as trimethoxyvinylsilane; an allyl compound such as allyl acetate, allyl chloride, allyl alcohol or dimethylallyl alcohol; trimethyl-(3-acrylamide-3-dimethylpropyl)-ammonium chloride; acrylamide-2-methylpropanesulfonic acid; and the like.

The EVOH (A) may be those post-modified by urethanization, acetalization, cyanoethylation or the like so long as they do not impair the effects of the present invention.

The EVOH (A) used in the present invention is required to have a water content of 20 to 50 % by weight, especially 22.5 to 35 % by weight, more especially 25 to 30 % by weight. If the water content is less than 20 % by weight, the melt-mixing of the components (A) and (B) must be carried out at a temperature not less than the boiling point of water. If the water content is more than 50 % by weight, a large amount of water blows off from EVOH when melt-mixing the components (A) and (B), so stable processing is difficult to conduct.

The water content can be adjusted by various methods. Methods which permit EVOH to uniformly contain water are preferable. Such preferable methods are, for instance, (1) a method wherein a solution of EVOH in an alcohol/water mixed solvent is poured into water to precipitate EVOH particles, and the particles are filtered and thoroughly washed with water to remove alcohol, thus including water in EVOH, (2) a method wherein EVOH is immersed in pressurized hot water for about 1 to about 3 hours, and (3) a method wherein a paste obtained in the preparation of EVOH when hydrolyzing an ethylene-vinyl acetate copolymer is introduced into water to precipitate EVOH in a solid form such as strand, thus including water in EVOH. Of these methods, the method (3) is particularly preferable. Particles or pellets of EVOH may be directly mixed with water, but attention should be given to the mixing conditions such as temperature and stirring so that EVOH contains water uniformly.

Any of natural and synthetic water-swellable inorganic compounds having a layer structure can be used in the present invention as a component (B) without any restriction. The water-swellable inorganic compounds having a layer structure include, for instance, clay minerals such as smectites (montmorillonite group) and vermiculite, synthetic micas, and the like. Examples of the smectites are montmorillonite, beidelite, nontronite, saponite, hectorite, sauconite, stevensite, and the like. From the viewpoints of dispersibility and swellability, smectites, especially montmorillonite, are preferred. Water-swellable fluoromica minerals such as Na-type fluorotetrasilisic mica, Na-type taeniolite, Li-type taeniolite and Na-type hectorite are also preferably used.

The aspect ratio of the layered inorganic compounds is not particularly limited, but it is preferably at least 50, more preferably at least 100, the most preferably at least 200.

It is preferable that the cation exchange capacity of the water-swellable layered inorganic compound (B) is at least 100 meq/100 g, especially from 100 to 130 meq/100 g, more especially from 105 to 120 meq/ 100 g, since the effects of the present invention are more markedly produced within this range.

In the present invention, the state of the water-swellable layered inorganic compound (B) used for preparing the objective resin composition is not particularly limited, and the compound (B) can be used in any state such as a powder state or a slurry state of layered minerals swollen with water. In case of using the compound (B) in the state of slurry, the concentration of the compound (B) in the slurry is not particularly limited, but preferably the concentration is from 0.1 to 50 % by weight, especially 0.5 to 40 % by weight, more especially 1 to 30 % by weight, still more especially 2 to 20 % by weight. If the concentration is less than 0.1 % by weight, the amount of water introduced into an extruder becomes too large, so the melt-mixing processability is lowered. If the concentration is more than 50 % by weight, the dispersibility of the compound (B) is lowered. The slurry can be obtained by stirring the compound (B) with water using a known stirrer. A high pressure dispersing machine such as ultra high pressure homogenizer, a ball mill and a ultrasonic treating apparatus can also be used in order to raise the dispersibility.

The resin composition of the present invention can contain the EVOH (A) and the inorganic compound (B) in any proportion. It is preferable that the weight ratio of EVOH (A) to inorganic compound (B) on a dry basis is from 99.5/0.5 to 50/50, especially 99/1 to 60/40, more especially 98/2 to 70/30. If the A/B ratio is more than 99.5/0.5, the gas barrier property and the boiling water resistance of the resin composition tend to lower. If the A/B ratio is less than 50/50, the mechanical properties and the melt moldability of the resin composition tend to lower.

In the present invention, the components (A) and (B) are melt-mixed (or melt-kneaded) using a single screw or twin screw extruder. A twin screw extruder is preferred from the viewpoint of stability in melt-kneading. The melt-kneading can also be conducted by tandem type extrusion wherein two extruders are installed. How to combine the first stage extruder and the second stage extruder is not particularly limited, and adaptable are any of combinations, e.g., combination of first stage twin screw extruder and second stage single screw extruder, combination of first stage twin screw extruder and second stage twin screw extruder, and combination of first stage single screw extruder and second stage single screw extruder. A combination of first stage twin screw extruder and second stage single screw extruder is preferable from the viewpoints of processing stability and dispersibility of the component (B). The melt-kneading method using a twin screw extruder is explained below, but the melt-kneading method is not limited thereto.

The components (A) and (B) are melt-kneaded and extruded from an extruder and the extruded molten mixture is once formed into pellets, and the thus obtained resin composition in the form of pellets is then subjected to melt molding to provide molded articles. A twin screw extruder equipped with a die, a hopper and optionally a vent is used for such pelletization (melt-kneading). The inner diameter of a barrel of the extruder is not particularly limited, but preferably the inner diameter is at least 20 mm, especially from 30 to 150 mm. If the inner diameter of barrel is less than 20 mm, the productivity is low. The L/D ratio of a screw of the extruder is preferably from 20 to 80, especially from 30 to 60. If the L/D ratio is less than 20, the extruder may be short of mixing ability. If the L/D ratio is more than 80, the residence time of the resin composition in the extruder becomes unnecessarily long, so there is a possibility that the resin composition is thermally deteriorated. There can also be used an extruder, e.g., twin screw extruder model HTM made by Kabushiki Kaisha CTE, wherein the length of two screws are not the same, that is, a long screw and a short screw are disposed and the top end portion of the twin screw has a single screw structure.

The components (A) and (B) may be fed to a twin screw extruder in any manner. For example, the components (A) and (B) may be fed together to a hopper of the extruder, or the component (A) may be fed from a hopper while the component (B) be fed from a part of a barrel of the extruder (side feed).

The components (A) and (B) fed to the extruder are melt-mixed therein. It is preferable to set the melt-mixing temperature with temperature gradients in the extruder such that, for example, the first temperature setting zone extending from below a hopper is kept at a temperature of about 50 to about 80°C, especially 50 to 65°C, more especially 50 to 60°C, the temperature setting zone of the subsequent barrel part is kept at a temperature higher than the first zone by 15 to 50°C, and the die is kept at a temperature higher than the barrel part by 0 to 40°C.

The largest feature of the present invention resides in that the components (A) and (B) are melt-mixed in an extruder, preferably a twin screw extruder, under the following condition (1):

$$200 < R \times W < 8,000 \tag{1}$$

wherein R is a residence time (second) of (A) and (B) in the extruder from the introduction of both (A) and (B) into the extruder up to the extrusion thereof, and W is a consumed electric power (kW) of the extruder. If the $R \times W$ value is less than 200, dispersion failure of the component (B) occurs, and if the $R \times W$ value is more than 8,000, sufficient gas barrier property and desired boiling water resistance are not obtained. Preferable range of $R \times W$ value is $250 < R \times W < 7,500$, especially $300 < R \times W < 7,000$.

Preferable residence time R is from 30 to 900 seconds, especially 45 to 750 seconds, more especially 60 to 600 seconds. If the residence time is less than 30 seconds, there is a possibility that sufficient mixing is not achieved, and if the residence time is more than 900 seconds, there is a possibility that the quality of the obtained resin composition is deteriorated. In the case that either one of the components (A) and (B) is fed from a hopper and another is fed from a side feed port, the residence time R in the equation (1) means the time that the component fed from the side feed port stays in the extruder, namely time from the introduction from the side feed port up to the extrusion from the extruder.

Preferable consumed electric power W of the extruder is from 2 to 20 kW, especially 3 to 18 kW. If the consumed electric power W is less than 2 kW, the component (B) is not sufficiently dispersed into EVOH (A). If the consumed electric power W is more than 20 kW, there is a possibility that the apparent melting point of EVOH (A) rises due to shearing heat generation, so EVOH becomes easy to solidify to clog a vent up or a die. The consumed electric power W is read on an electric power indication of an operation panel of an extruder.

In order to prevent thermal deterioration of the resin composition, it is also preferable to seal the inside of hopper and around a vent port with nitrogen gas.

The melt-mixed resin composition is extruded through a die disposed at the exit of the extruder. The shape of the hole of the die is preferably a circle having a diameter of 1 to 7 mm, especially 2 to 5 mm, in consideration of obtaining pellets of the resin composition having adequate shape and size (in case of columnar pellets, a diameter of 1 to 10 mm, preferably 2 to 6 mm, and a length of 1 to 10 mm, preferably 2 to 6 mm). The number of holes is preferably from 3 to 100, especially 10 to 50, from the viewpoint of productivity. Further, it is preferable for removal of foreign materials and stabilization of resin pressure (extrusion stability) to dispose at least one sheet, especially at least two sheets, of a mesh screen between the extruder and the die. From the viewpoint of extrusion stability, it is also preferable to dispose a gear pump, a heat exchanger and the like.

The resin composition extruded in the form of strands from a die (strand die) is cooled and cut and is then subjected to drying treatment to give the objective resin composition in the form of pellets. The drying treatment can be conducted by various methods, e.g., fluidized drying and stationary drying. In the fluidized drying, the resin composition (pellets) is dried with stirring or dispersing by mechanical operation or hot air, using a drier such as cylindrical channel agitated drier, cylindrical drier, rotary drier, fluidized-bed drier, vibrating fluidized-bed drier or cone rotary drier. The stationary drying is conducted without imparting any substantial dynamic action such as stirring or dispersing to the resin composition. The drier used for stationary drying includes, for instance, a drier of material stationary type such as batch box-type drier, and a drier of material transfer type such as band drier, tunnel drier or vertical silo drier.

It is preferable to conduct the drying treatment so as to give a resin composition (pellets) having a water content of 0.1 to 3 % by weight, especially 0.1 to 1 % by weight, more especially 0.1 to 0.5 % by weight. If the water content of the final product is less than 0.1 % by weight, the heat resistance is poor, and if the water content is more than 3 % by weight, molding failure such as foaming may occur due to lack of degassing. As another drying method, it is also possible to directly remove water from a vent of an extruder when melt-mixing the resin composition by the extruder.

The resin composition of the present invention may contain other resins and usual additives so long as the objects of the present invention are achieved. Other resins include, for instance, thermoplastic resins as mentioned after and water-soluble resins such as polyvinyl alcohol, polyvinyl pyrolidone, polyethylene glycol, polyoxazoline, polyacylic acid, a water-soluble polyamide, a water-soluble polyester, and other EVOH resins different from EVOH used as the component (A) in ethylene content, MFR and degree of hydrolysis. Examples of the usual additives used in the present invention are, for instance, plasticizer, heat stabilizer, ultraviolet absorber, oxygen absorber, antioxidant, colorant, filler, drying agent, antistatic agent, deodorant, surfactant, antimicrobial agent, anti-hazing agent, antiblocking agent, anti-slip agent, and the like. It is also possible to incorporate the resin composition with, as an anti-gelling agent, hydrotalcite group minerals, hindered phenol heat stabilizers, hindered amine heat stabilizers, or metal salts of higher fatty acids.

The resin composition of the present invention provides molded articles having excellent properties such as gas barrier property, boiling water resistance, impact resistance and flex cracking resistance. The resin composition can be molded by, for example, a melt-molding method into various shapes such as pellets, film, sheet, container, fiber, rod, tube and the like. A re-grind as recovered by pulverization of the molded articles of the resin composition or scrap thereof can be used again for the melt-molding, if required, with fresh pellets of the resin composition. As a melt-molding method are mainly adopted an extrusion method such as T-die extrusion, blown film extrusion, blow molding, melt spinning or profile extrusion, and an injection molding method. In many cases, the melt molding temperature is selected from the range of 150 to 250°C.

Preferably the resin composition of the present invention is used in the form of a laminate comprising a layer prepared from the resin composition and at least one thermoplastic resin layer disposed either or both surfaces of the layer of the resin composition. Such a laminate is suitable for practical use. The laminate is prepared by laminating other substrates on at least one surface of the layer made from the resin composition of the present invention. The lamination is carried out, for example, by a method wherein a thermoplastic resin is melt-extruded onto a film or sheet made from the resin composition of the present invention, a method wherein the resin composition is melt-extruded onto a substrate of a thermoplastic resin or the like, a method wherein the resin composition and other thermoplastic resin are coextruded, or a dry laminating method wherein a film or sheet of the resin composition and a film or sheet of other material are laminated with a known adhesive such as an organotitanium compound, an isocyanate compound, a polyester compound or a polyurethane compound.

Examples of the thermoplastic resin used for lamination onto a layer of the resin composition of the present invention are, for instance, a polyolefin resin, a polyester resin, a polyamide resin, a styrene resin, a vinyl chloride resin, a vinylidene chloride resin, an acrylic resin, a vinyl ester resin, a polyester elastomer, a polyurethane elastomer, chlorinated polyethylene, chlorinated polypropylene, an aromatic or aliphatic polyketone, an aliphatic polyalcohol, and the like. Polyolefin resins, polyester resins and polyamide resins are preferably used.

Examples of the polyolefin resin are, for instance, homopolymers or copolymers of olefins, e.g., linear low density polyethylene (LLDPE), low density polyethylene (LDPE), very low density polyethylene (VLDPE), medium density polyethylene (MDPE), high density polyethylene (HDPE), ethylene-vinyl acetate copolymer (EVA), ionomer, ethylene-propylene block or random copolymer, ethylene-acrylic acid copolymer, ethylene-acrylic ester copolymer, ethylene-methacrylic acid copolymer, ethylene-methacrylic ester copolymer, polypropylene, propylene-$\alpha$-olefin copolymer (e.g., $\alpha$-olefin having 4 to 20 carbon atoms), polybutene, polypentene, and polymethylpentene; and polyolefins in a broad sense, e.g., modified polyolefins derived from the above-mentioned homopolymers or copolymers by graft polymerization of an unsaturated carboxylic acid or its ester and blends of olefin homo- or copolymers and/or modified polyolefins. In particular, linear low density polyethylene (LLDPE), low density polyethylene (LDPE), very low density polyethylene (VLDPE), ethylene-vinyl acetate copolymer (EVA) and ionomer are preferably used.

Examples of the polyamide resin are, for instance, polycapramide (nylon 6), poly-$\omega$-aminoheptanoic acid (nylon 7), poly-$\omega$-aminononanoic acid (nylon 9), polyundecaneamide (nylon 11), polylauryllactam (nylon 12), polyethylenediamine adipamide (nylon 26), polytetramethylene adipamide (nylon 46), polyhexamethylene adipamide (nylon 66), polyhexamethylene sebacamide (nylon 610), polyhexamethylene dodecamide (nylon 612), polyoctamethylene adipamide (nylon 86), polydecamethylene adipamide (nylon 108), caprolactam/lauryllactam copolymer (nylon 6/12), caprolactam/$\omega$-aminononanoic acid copolymer (nylon 6/9), caprolactam/hexamethylene diammonium adipate copolymer (nylon 6/66), lauryllactam/hexamethylene diammomium adipate copolymer (nylon 12/66), ethylenediamine adipamide/hexamethylene diammonium adipate copolymer (nylon 26/66), caprolactam/hexamethylene diammonium adipate/hexamethylene diammonium sebacate copolymer (nylon 66/610), ethylene ammonium adipate/hexamethylene diammonium adipate/hexamethylene diammonium sebacate copolymer (nylon 6/66/610), polyhexamethyleneisophthalamide, polyhexamethyleneterephthalamide, hexamethyleneisophthalamide/terephthalamide copolymer, these polyamide resins modified with an aromatic amine such as methylenebenzylamine or m-xylylenediamine, and the like. The polyamide resins may used alone or in admixture thereof.

Terminal-controlled polyamide resins wherein all or some of the terminal carboxyl groups and/or amino groups are modified with an alkyl monocarboxylic acid, an alkyl dicarboxylic acid, an alkylmonoamine or an alkyldiamine, can also be used in the present invention.

Polycondensation products of an aromatic dicarboxylic acid or its alkyl ester and a glycol are used as a polyester resin for the lamination. Polyester resins having main repeating units of ethylene terephthalate are preferable, and they may contain other components within a range not greatly impairing the processability and strength. Examples of the other acid component are, for instance, an aromatic dicarboxylic acid such as isophthalic acid, diphenyl-4,4'-dicarboxylic acid, diphenoxyethane dicarboxylic acid, 2,6-naphthalene dicarboxylic acid or 2,7-naphthalene dicarboxylic acid, an ester-formable derivative derived from the aromatic dicarboxylic acid, an aliphatic dicarboxylic acid such as adipic acid, sebacic acid, azelaic acid or succinic acid, an ester-formable derivative derived from the aliphatic dicarboxylic acid, an alicyclic dicarboxylic acid such as cyclohexane dicarboxylic acid or hexahydroterephthalic acid, an ester-formable derivative derived from the alicyclic dicarboxylic acid, an hydroxy acid such as p-hydroxybenzoic acid or hydroxycaproic acid, an ester-formable derivative derived from the hydroxy acid, and other acids such as trimellitic acid and pyromellitic acid. Examples of the other glycol component are, for instance, an aliphatic glycol such as diethylene glycol, trimethylene glycol, tetramethylene glycol or neopentyl glycol, an alicyclic glycol such as 1,4-cyclohexane dimethanol, an aromatic glycol such as bisphenol A or an alkylene oxide adduct of bisphenol A, a polyalkylene glycol such as polyethylene glycol, polypropylene glycol or polytetramethylene glycol, and other polyhydric alcohols such as glycerol, 1,3-propane diol and pentaerythritol.

The content of the ethylene terephthalate units in the polyester resin is from about 75 to 100 % by mole, preferably about 85 to 100 % by mole. Preferable intrinsic viscosity of the polyester resin is from 0.5 to 1.3 dl/g, especially 0.65 to 1.2 dl/g, measured at 30°C in a mixed solvent of phenol/tetrachloroethane = 50/50 by weight.

Other polyester resins comprising main repeating units of ethylene terenaphthalate are also usable in the present invention, and they may contain other components as mentioned above. The content of the ethylene terenaphthalate units in the polyester resin is from about 75 to 100 % by mole, preferably about 85 to about 98 % by mole. Preferable intrinsic viscosity of this polyester resin is from 0.4 to 1.2 dl/g, especially 0.55 to 1.0 dl/g, measured at 30°C in a mixed solvent of phenol/tetrachloroethane = 50/50 by weight.

A blend of the ethylene terephthalate-based polyester resin and the ethylene terenaphthalate-based polyester resin is also preferable from the viewpoints of improvement in gas barrier property, ultraviolet barrier property and melt moldability. The blending ratio is from 5 to 90 % by weight, preferably 15 to 85 % by weight, of the ethylene terephthalate-based polyester resin and 95 to 10 % by weight, preferably 85 to 15 % by weight, of the ethylene terenaphthalate-based polyester resin. The polyester resin may be incorporated with other thermoplastic resins such as MXD-nylon 6, polycarbonate, polyarylate and liquid crystal polymer, or additives within a range not greatly impairing the properties thereof.

Laminates can also be prepared by once molding the resin composition of the present invention into a sheet-like molded article such as film or sheet, and then extrusion-coating other material onto the sheet-like molded article, or laminating the sheet-like molded article onto a substrate such as film or sheet of other material with an adhesive. Other material may be any materials and includes thermoplastic resins, papers, metallic foils, non-stretched, uniaxially stretched or biaxially stretched plastic films or sheets and those vapor-deposited with an inorganic material, woven fabric, nonwoven fabric, metallic flocculus, woods, and the like.

Further, laminates can be prepared by a solution coating method. For example, a solution of the resin composition of the present invention in a mixed solvent of water and an alcohol (or other organic solvents) is coated onto a desired substrate such as a thermoplastic resin film or sheet by known coating methods, e.g., a roll coating method such as Mayer bar coating, gravure coating or reverse roll coating, a spray coating method, and a dip coating method. Drying is conducted in a known manner, for example, at a temperature of 40 to 180°C, preferably 60 to 140°C. for about 5 seconds to about 5 minutes, usually up to a volatile content of at most 2 % by weight. In order to enhance the adhesive strength between the resin composition layer and the substrate, a conventional anchor coating material such as polyurethane-based or polyester-based anchor coating material may be previously coated onto the substrate.

The laminates of the present invention are able to have any layer structures comprising a layer "a" or layers "al, a2..." of the resin composition of the present invention and a layer "b" or layers "b1, b2..." of other material such as a thermoplastic resin, if the laminates are in the form of film, sheet or bottle, e.g., b/a/b, a/b/a, a1/a2/b, a/b1/b2, b2/b1/a/b1/b2, b1/b2/a/b3/b4, and a1/b1/a2/b2/, to say nothing of a/b two layer structure. Layer structures b/a/b and b2/b1/a/b1/b2 are particularly preferable. In case of filament-like products, they are able to have layer structures such as a-b bimetal type structure, core (a)-sheath (b) structure, core (b)-sheath (a) structure, and eccentric core-sheath structures.

The layer structures as mentioned above may further contain an adhesive resin layer or layers between the respective layers. Various adhesive resins can be used in the present invention, and are selected according to the kind of the material of the layer b. A representative adhesive resin is a modified polyolefin containing a carboxyl group as prepared by chemically bonding an unsaturated carboxylic acid or its anhydride to a polyolefin, e.g., polyolefin resins as mentioned above regarding lamination, by means of addition reaction, grafting or the like. Preferable examples of the modified polyolefin used as an adhesive are, for instance, maleic anhydride-grafted polyethylene, maleic anhydride-grafted polypropylene, maleic anhydride-grafted ethylene-propylene block or random copolymer, maleic anhydride-grafted ethylene-ethyl acrylate copolymer, maleic anhydride-grafted ethylene-vinyl acetate copolymer, and the like. These may be used alone or in admixture thereof. The content of the unsaturated carboxylic acid or its anhydride in the modified polyolefin is preferably from 0.001 to 3 % by weight, more preferably from 0.01 to 1 % by weight, the most preferably from 0.03 to 0.5 % by weight. If the degree of modification is low, the adhesive property may be insufficient, and if the degree of modification is high, crosslinking reaction may occur to deteriorate the moldability. The adhesive resin may be used in the form of a blend with the resin composition according to the present invention, EVOH other than EVOH (A), a rubber or elastomer such as polyisobutylene or ethylene-propylene rubber, or a resin used in the layer b. In particular, the adhesive strength may be enhanced by blending the adhesive resin, namely modified polyolefin, with a polyolefin resin which differs from the polyolefin constituting the modified polyolefin.

The thickness of each layer of the laminate varies depending on layer constitution, kind of layer b, uses, shape of final product such as container and required properties. In general, the thickness is about 5-500 μm, especially about 10-200 μm, for the layer a, and is about 5-5,000 μm, especially about 30-1,000 μm, for the layer b, and is about 5-400 μm, especially about 10-150 μm, for the adhesive layer. If the thickness of the layer a is less than 5 μm, the layer a is short of the gas barrier property and stable thickness control is difficult, and if the thickness of the layer a is more than 500 μm, the secondary processability such as stretchability is deteriorated. If the thickness of the layer b is less than 5 μm, the rigidity is insufficient, and if the thickness of the layer b is more than 5,000 μm, the flexibility is lowered and the weight increases. If the thickness of the adhesive layer is less than 5 μm, the interlaminar strength is insufficient and stable thickness control is difficult, and if the thickness is more than 400 μm, the weight increases and also it is unfavorable from an economical point of view.

The respective layers of the laminate may contain various additives as mentioned above such as a modifier and a filler for the purpose of enhancing molding processability and physical properties, and other resins so long as the effects of the present invention are not impaired.

The laminates according to the present invention can be directly used in various shapes, but it is also preferable to apply a stretching treatment to the laminates in order to improve the physical properties of the laminates. Uniaxial stretching and biaxial stretching are applicable. It is favorable for physical properties to stretch the laminates in a stretching ratio (draw ratio) as high as possible.

The stretching can be conducted by a known method, e.g., roll stretching method, tenter stretching method, tubular film method, blow molding, and others such as deep drawing method and vacuum-pressure forming method which are capable of achieving a high stretching ratio. Biaxial stretching may be simultaneous biaxial stretching and two stage biaxial stretching. The stretching temperature is selected from the range of about 60 to about 170°C, preferably about 80 to about 160°C.

After the completion of the stretching, it is preferable to subsequently conduct heat setting. The heat setting can be conducted in a known manner, for example, by heat-treating the stretched laminate at a temperature of 80 to 170°C, preferably 100 to 160°C, for about 2 to about 600 seconds while keeping the stretched state of the laminate.

The laminates of the present invention can be molded into various shapes. For example, in case of preparing multi-layer structured containers such as cup and tray from a multi-layer film or sheet, draw forming methods are adopted, e.g., vacuum forming, pressure forming, vacuum-pressure forming and plug assist vacuum-pressure forming. In case of preparing multi-layer structured containers such as tube and bottle from a multi-layer parison (a tubular premolding before blowing step in blow molding), blow molding methods are adopted, e.g., extrusion blow molding (twin-head type, mold-transfer type, parison-shift type, rotary type, accumlater type or horizontal parison type), cold parison type blow molding, injection blow molding, and biaxial stretching blow molding (extrusion cold parison biaxial stretching blow molding, injection cold parison biaxial stretching blow molding or injection in-line type biaxial stretching blow molding). Also, multi-layer containers can be directly prepared by using a co-injection molding machine.

The thus obtained laminates may have any shapes, e.g., film, sheet, tape, bottle, pipe, filament, profile extrusion products and the like. The obtained laminates can be subjected, as occasion demands, to heat treatment, cooling treatment, rolling treatment, printing, dry lamination, solution or melt coating, bag making processing, deep drawing processing, box making processing, tube making processing, splitting and the like.

The thus obtained containers such as cup, tray, tube or bottle, and bags and cap or cover materials made of stretched films are useful as packaging materials for general foods, condiments such as mayonnaise and dressing, fermented foods such as miso, fat and oil foods such as salad oil, and drinks such as juice, carbonated drink, beer or wine, and as containers for cosmetics, medicines, detergents, perfumes, industrial chemicals, agricultural chemicals and fuels. In particular, they are useful as containers for liquid foods (including drinks). They are also suitably used as packaging materials for boiling treatment and retorting.

The present invention is more specifically described and explained by means of the following Examples, in which all parts and % are by weight unless otherwise noted.

EXAMPLE 1

To a hopper of a twin-screw extruder (L/D = 42, inner diameter 30 mm) was placed 132 parts of EVOH having a water content of 28 % (ethylene content 29 % by mole, degree of hydrolysis 99.8 % by mole). After melting the EVOH at 80°C, 5 parts of natural montmorillonite (cation exchange capacity 109 meq/ 100 g, trade mark "KUNIPIA F", product of Kunimine Kogyo Kabushiki Kaisha) was continuously fed from a side feeder of the extruder to form a mixture of EVOH and montmorillonite. The melt-mixing was conducted under the following conditions.

Temperature of a first zone extending from below the hopper: 70°C
Temperature of a subsequent barrel part: 90°C
Temperature of a die: 85°C
Residence time R of the mixture in the extruder: 80 seconds
Electric power W consumed by a motor of the extruder: 10 kW

The (R×W) value was 800 and satisfied the equation (1) mentioned above.

Strands extruded out of the extruder were then cut to give pellets having a length of 3 mm and a diameter of 2.5 mm. The pellets were vacuum-dried at 60°C up to water content of 0.2 %. The thus obtained resin composition in the form of pellets was evaluated as follows:

In the above operation, EVOH having a water content of 28 % was prepared by dissolving EVOH in a mixed solvent of water/methanol = 50 / 50 by weight to give a 40 % paste, pouring the paste into cold water to solidify, cutting the resulting solid into pellets, thoroughly washing the pellets with deionized water and drying up to water content of 28 %.

Boiling water resistance: appearance

The resin composition pellets were fed to a single screw extruder kept at 220°C and formed into a film having a thickness of 30 μm by T-die casting. The obtained T-die film was subjected to a boiling treatment by immersing in hot water of 90°C for 30 minutes. The state of the film was visually observed and evaluated according to the following criteria.

○: No dissolution and whitening phenomena of the film is observed.

×: Dissolution of the film is observed.

Impact resistance

The impact strength (kg·cm) of the T-die film obtained above was measured at 23°C and 50 %RH by a film impact tester made by Rigaku Kogyo Kabushiki Kaisha.

Flex cracking resistance

The T-die film obtained above was cut into A4 size, and bent 100 times at 23°C and 50 %RH by a Gelvo type flex-cracking tester made by Rigaku Kogyo Kabushiki Kaisha. The number of generated pinholes was counted.

The results are shown in Table 1.

EXAMPLE 2

The procedure of Example 1 was repeated except that the amount of natural montmorillonite was changed from 5 parts to 10 parts, and the melt-mixing was conducted under the conditions of residence time R 80 seconds and consumed electric power W 12 kW. The (R×W) value was 960 and satisfied the equation (1).

EXAMPLE 3

The procedure of Example 1 was repeated except that the amount of natural montmorillonite was changed from 5 parts to 3 parts, and the melt-mixing was conducted under the conditions of residence time R 70 seconds and consumed electric power W 9 kW. The (R×W) value was 630 and satisfied the equation (1).

EXAMPLE 4

The procedure of Example 1 was repeated except that the amount of natural montmorillonite was changed from 5 parts to 20 parts, and the melt-mixing was conducted under the conditions of residence time R 60 seconds and consumed electric power W 18 kW. The (R×W) value was 1080 and satisfied the equation (1).

EXAMPLE 5

The procedure of Example 1 was repeated except that 15 parts of natural montmorillonite having a cation exchange capacity of 107 meq/100 g (trade mark "KUNIPIA P", product of Kunimine Kogyo Kabushiki Kaisha) was used instead of 5 parts of KUNIPIA F, and the melt-mixing was conducted under the conditions of residence time R 80 seconds and consumed electric power W 13 kW. The (R×W) value was 1040 and satisfied the equation (1).

EXAMPLE 6

The procedure of Example 1 was repeated except that EVOH having a water content of 33 %, an ethylene content of 32 % by mole and a degree of hydrolysis of 99.7 % by mole was used as EVOH (A), and the melt-mixing was conducted under the conditions of residence time R 95 seconds and consumed electric power W 8 kW. The (R×W) value was 760 and satisfied the equation (1).

EXAMPLE 7

The procedure of Example 1 was repeated except that the melt-mixing was conducted under the conditions of residence time R 120 seconds and consumed electric power W 13 kW. The (R×W) value was 1560 and satisfied the equation (1).

EXAMPLE 8

To a hopper of a twin-screw extruder (L/D = 80, inner diameter 30 mm) was placed 125 parts of EVOH having a water content of 20 % (ethylene content 29 % by mole, degree of hydrolysis 99.8 % by mole). On the other hand, 20 parts of a slurry prepared from 1 part of natural montmorillonite (cation exchange capacity 109 meq/ 100 g, trade mark "KUNIPIA F", product of Kunimine Kogyo Kabushiki Kaisha) and 10 parts of water was continuously fed from a side feeder of the extruder to form a mixture of EVOH and montmorillonite. The melt-mixing was conducted under the following conditions.

Temperature of a first zone extending from below the hopper: 80°C

Temperature of a subsequent barrel part: 105°C

Temperature of a die: 105°C

Residence time R of the mixture in the extruder: 150 seconds

Electric power W consumed by a motor of the extruder: 15 kW

The (R×W) value was 2250 and satisfied the equation (1) mentioned above.

Thereafter, the obtained resin composition was treated and evaluated in the same manner as in Example 1.

COMPARATIVE EXAMPLE 1

The procedure of Example 1 was repeated except that the water content of EVOH was changed from 28 % to 10 %.

COMPARATIVE EXAMPLE 2

The procedure of Example 1 was repeated except that the water content of EVOH was changed to 60 %.

COMPARATIVE EXAMPLE 3

The procedure of Example 1 was repeated except that the melt-mixing was conducted under the conditions of residence time R 50 seconds and consumed electric power W 3 kW. The (R×W) value was 150 and did not satisfy the equation (1).

COMPARATIVE EXAMPLE 4

The procedure of Example 1 was repeated except that the melt-mixing was conducted under the conditions of residence time R 360 seconds and consumed electric power W 25 kW. The (R×W) value was 9,000 and did not satisfy the equation (1).

The results of Examples 1 to 8 and Comparative Examples 1 to 4 are shown in Table 1.

Table 1

|  | Boiling water resistance | Impact resistance (kg.cm) | Flex cracking resistance (number of pinholes) |
|---|---|---|---|
| Ex. 1 | ○ | 7 | 60 |
| Ex. 2 | ○ | 5 | 90 |
| Ex. 3 | ○ | 8 | 30 |
| Ex. 4 | ○ | 5 | 130 |
| Ex. 5 | ○ | 5 | 120 |
| Ex. 6 | ○ | 8 | 85 |
| Ex. 7 | ○ | 7 | 75 |
| Ex. 8 | ○ | 6 | 105 |
| Com. Ex. 1 | × | 1 | 205 |
| Com. Ex. 2 | × | 1 | 250 |
| Com. Ex. 3 | × | 2 | 195 |
| Com. Ex. 4 | × | 2 | 220 |

EXAMPLE 9

There was prepared by a coextrusion multi-layer film blowing machine a coextruded multi-layer film (laminate) having an intermediate layer (I) of the resin composition obtained in Example 1, both outer layers (II) of a linear low density polyethylene (trade mark "KERNEL KF270" made by Nippon Polychem Kabushiki Kaisha, melt flow rate (MFR) 1.7 g/10 minutes at 190°C, density 0.907 g/cm$^3$) and adhesive resin layers (III) of a maleic anhydride-modified linear low density polyethylene (trade mark "MODIC-AP M503" made by Mitsubishi Chemical Corporation, MFR 1.7 g/10 minutes at 190°C, density 0.92 g/cm$^3$) disposed between the intermediate layer (I) and each of the outer layers (II) in thickness of (II)/(III)/(I)/(III)/(II) = 60 µm/5 µm/20 µm/5 µm/60 µm under the following molding conditions.

Coextrusion conditions

1. Intermediate layer
Extruder: barrel diameter 40 mm
Screw: full flighted screw
L/D: 28
Temperature: feed zone 200°C, compression zone 220°C, metering zone 230°C
2. Both outer layers
Extruder: barrel diameter 40 mm
Screw: full flighted screw
L/D: 28
Temperature: feed zone 170°C, compression zone 180°C, metering zone 185°C
3. Adhesive resin layers
Extruder: barrel diameter 40 mm
Screw: full flighted screw
L/D: 28
Temperature: feed zone 170°C, compression zone 180°C, metering zone 185°C
4. Die
Diameter: 150 mm
Shape: round die
Temperature: 220°C

The obtained laminate was subjected to a flex cracking test by flexing 300 times at 23°C and 50 %RH using a Gelvo type flex-cracking tester made by Rigaku Kogyo Kabushiki Kaisha, and the gas barrier proper (oxygen permeability) thereof was measured. The result is shown in Table 2.

EXAMPLE 10

A coextruded multi-layer film (laminate) was prepared and evaluated in the same manner as in Example 9 except that the resin composition obtained in Example 3 was used in the intermediate layer (I) instead of the resin composition obtained in Example 1.

COMPARATIVE EXAMPLE 5

A coextruded multi-layer film (laminate) was prepared and evaluated in the same manner as in Example 9 except that the resin composition obtained in Comparative Example 1 was used in the intermediate layer (I).

COMPARATIVE EXAMPLE 6

A coextruded multi-layer film (laminate) was prepared and evaluated in the same manner as in Example 9 except that the resin composition obtained in Comparative Example 2 was used in the intermediate layer (I).
The results of Examples 9 and 10 and Comparative Examples 5 and 6 are shown in Table 2.

Table 2

| Gas barrier property (Oxygen permeability: cc/m$^2$·day·atm) | |
|---|---|
| Example 9 | 1.1 |
| Example 10 | 1.0 |
| Com. Ex. 5 | 2.1 |
| Com. Ex. 6 | 2.2 |

The films prepared from the resin compositions of the present invention are superior in boiling water resistance, impact resistance and flex cracking resistance as well as gas barrier property. Thus, films, sheets and containers prepared from the resin compositions of the present invention are useful as a packaging material for foods, medicines, industrial chemicals, agricultural chemicals and others.

A resin composition prepared by melt-mixing (A) a hydrolyzed ethylene-vinyl acetate copolymer having a water content of 20 to 50 % by weight and (B) a water-swellable inorganic compound having a layer structure in an extruder under the condition of $200 < R \times W < 8,000$ wherein R is a residence time (second) of (A) and (B) in the extruder from the introduction of both (A) and (B) into the extruder up to the extrusion thereof from the extruder, and W is a consumed electric power (kW) of the extruder. The composition provides molded articles such as film having excellent boiling water resistance, impact resistance and flex cracking resistance as well as gas barrier property, which are useful as a packaging material.

**Claims**

1. A resin composition comprising (A) a hydrolyzed ethylene-vinyl acetate copolymer and (B) a water-swellable inorganic compound having a layer structure, wherein said resin composition is prepared by melt-mixing said copolymer (A) having a water content of 20 to 50 % by weight and said inorganic compound (B) in an extruder under the following condition (1):

$$200 < R \times W < 8,000 \qquad (1)$$

wherein R is a residence time (second) of (A) and (B) in the extruder from the introduction of both (A) and (B) into the extruder up to the extrusion thereof from the extruder, and W is a consumed electric power (kW) of the extruder.

2. The composition of Claim 1, wherein said inorganic compound (B) has a cation exchange capacity of at least 100 meq/100 g.

3. The composition of Claim 1 or 2, wherein said copolymer (A) and said inorganic compound (B) are present in an A/B ratio of 99.5/0.5 to 50/50 by weight.

4. The composition of Claim 1, 2 or 3, which has a water content of 0.1 to 3 % by weight.

5. A laminate having at least one layer made from the resin composition of any one of claims 1 to 4.

European Patent Office

**EUROPEAN SEARCH REPORT**

Application Number

EP 04 00 8129

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | EP 0 479 031 A (KURARAY CO) 8 April 1992 (1992-04-08) * page 3, line 56 - page 4, lines 18-23; claims 1-4 * * page 5, lines 7-15 - page 6, line 9; example 1 * ----- | 1-5 | B32B27/20 C08K3/34 C08K7/00 |
|  |  |  | TECHNICAL FIELDS SEARCHED (Int.Cl.7) |
|  |  |  | B32B C08K |

The present search report has been drawn up for all claims

| Place of search | Date of completion of the search | Examiner |
|---|---|---|
| The Hague | 23 August 2004 | Derz, T |

**EP 1 468 819 A1**

## ANNEX TO THE EUROPEAN SEARCH REPORT
## ON EUROPEAN PATENT APPLICATION NO.

EP 04 00 8129

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2004

| Patent document cited in search report | | | Publication date | Patent family member(s) | | | Publication date |
|---|---|---|---|---|---|---|---|
| EP 0479031 | A | | 08-04-1992 | DE | 69123536 | D1 | 23-01-1997 |
| | | | | DE | 69123536 | T2 | 15-05-1997 |
| | | | | EP | 0479031 | A1 | 08-04-1992 |
| | | | | JP | 3159396 | B2 | 23-04-2001 |
| | | | | JP | 5039392 | A | 19-02-1993 |
| | | | | US | 5428094 | A | 27-06-1995 |

EPO FORM P0459

For more details about this annex : see Official Journal of the European Patent Office, No. 12/82

14